(19) Europäisches Patentamt
European Patent Office
Office européen des brevets

(11) EP 4 140 764 B1

(12) EUROPEAN PATENT SPECIFICATION

(45) Date of publication and mention of the grant of the patent:
**13.08.2025 Bulletin 2025/33**

(21) Application number: **21792173.3**

(22) Date of filing: **09.04.2021**

(51) International Patent Classification (IPC):
***B60C 1/00*** $^{(2006.01)}$ ***C08L 9/00*** $^{(2006.01)}$
***B60C 11/00*** $^{(2006.01)}$ ***B60C 3/04*** $^{(2006.01)}$
***B60C 11/03*** $^{(2006.01)}$

(52) Cooperative Patent Classification (CPC):
(C-Sets available)
**B60C 11/005; B60C 1/0016; B60C 3/04;**
B60C 2011/0025; B60C 2011/0033;
B60C 2011/0355 (Cont.)

(86) International application number:
**PCT/JP2021/015078**

(87) International publication number:
**WO 2021/215279 (28.10.2021 Gazette 2021/43)**

(54) **TIRE**
REIFEN
PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2020 JP 2020077216**

(43) Date of publication of application:
**01.03.2023 Bulletin 2023/09**

(73) Proprietor: **Sumitomo Rubber Industries, Ltd.**
**Kobe-shi, Hyogo 651-0072 (JP)**

(72) Inventors:
- **TANAKA, Tatsuhiro**
**Kobe-shi, Hyogo 651-0072 (JP)**
- **HAMAMURA, Kenji**
**Kobe-shi, Hyogo 651-0072 (JP)**

(74) Representative: **TBK**
**Bavariaring 4-6**
**80336 München (DE)**

(56) References cited:
**EP-A1- 2 565 056**
**EP-A1- 2 781 373**
**EP-A1- 3 141 402**
**WO-A1-2015/170615**
**JP-A- 2005 263 175**
**JP-A- 2010 174 232**
**JP-A- 2013 049 409**
**JP-A- H08 217 917**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 140 764 B1

(52) Cooperative Patent Classification (CPC): (Cont.)

C-Sets
**C08L 15/00, C08L 7/00, C08L 9/00, C08L 25/16, C08L 91/00, C08K 3/04, C08K 3/36, C08K 5/548, C08K 3/22, C08K 5/09, C08K 3/06, C08K 5/47, C08K 5/31;**
**C08L 15/00, C08L 9/00, C08L 25/16, C08L 91/00, C08K 3/04, C08K 3/36, C08K 5/548, C08K 3/22, C08K 5/09, C08K 3/06, C08K 5/47, C08K 5/31**

## Description

### TECHNICAL FIELD

The present invention relates to a tire having improved steering stability and pinch-cut resistance with a good balance.

### BACKGROUND ART

When the tire gets over a protrusion on a road surface or when the tire falls into a pothole, a bead part of the tire may be significantly deformed. Usually, the bead is surrounded by a carcass ply. When a tensile stress is applied to the carcass ply due to the deformation of the bead part, however, a cord contained in the carcass ply, as a result, may be cut. A damage associated with this cord cutting is called a pinch cut.

Patent Document 1 describes a tire for the purpose of improving pinch-cut resistance. Patent Document 2 describes a tire in which a reinforcement layer and a tread section are laminated in this order from the inside toward the outside in a radial direction of the tire. The tread section includes an inner base layer, an outer base layer and a cap layer that are laminated in this order from the inside toward the outside in the radial direction of the tire. The cap layer is made of a material of which a modulus of elasticity and a loss tangent are lower than those of a material of the outer base layer. The inner base layer is made of a material of which a modulus of elasticity is lower than that of a material of the cap layer.

### PRIOR ART DOCUMENT

Patent Document

Patent Document 1: JP 2019-202578 A
Patent Document 2: EP 3 141 402 A1

### SUMMARY OF THE INVENTION

### PROBLEM TO BE SOLVED BY THE INVENTION

Patent Document 1 shows an example in which the heavier the tire weight is, the higher the load durability and pinch-cut resistance are. However, it is considered that, in future, it will be required to improve the pinch-cut resistance while reducing the tire weight.

It is an object of the present invention to provide a tire having improved steering stability and pinch-cut resistance with a good balance.

### MEANS TO SOLVE THE PROBLEM

As a result of intensive studies, the present inventors have found that a tire having improved steering stability and pinch-cut resistance with a good balance can be obtained by setting a tire weight with respect to the maximum load capacity of the tire, and a tan $\delta$ and a complex elastic modulus of a rubber composition of a tread, within predetermined ranges, and completed the present invention.

The present invention is as defined in claim 1. Further beneficial embodiments are defined in the dependent claims.

### EFFECT OF THE INVENTION

The tire of the present invention, obtained by setting the tire weight with respect to the maximum load capacity of the tire, the tan $\delta$ and the complex elastic modulus of the rubber composition of the tread within the predetermined ranges, has improved steering stability and pinch-cut resistance with a good balance.

### BRIEF DESCRIPTION OF THE DRAWINGS

FIG. 1 is an enlarged cross-sectional view schematically showing a part of a tread of a tire.
FIG. 2 is a cross-sectional view showing a tire cross-sectional width Wt, a tire cross-sectional height Ht, and a tire outer diameter Dt.

EMBODIMENT FOR CARRYING OUT THE INVENTION

The tire according to the present invention is a tire comprising a tread, wherein a ratio ($G/W_L$) of a tire weight G (kg) to the maximum load capacity $W_L$ (kg) of the tire is 0.0150 or less, wherein the tread has three or more rubber layers formed of a rubber composition comprising a rubber component, and wherein a tan $\delta$ at 30°C of the rubber composition of at least one rubber layer of three or more rubber layers is 0.15 or more, and a complex elastic modulus at 30°C ($E^*_{30}$) of the rubber composition of at least one rubber layer of three or more rubber layers is 5.0 MPa or more.

When the tan $\delta$ at 30°C and the complex elastic modulus at 30°C ($E^*_{30}$) of the rubber composition satisfy the above-described requirements, a tire obtained has improved steering stability and pinch-cut resistance with a good balance. The reason for that is not intended to be bound by theory, but can be considered as follows.

The tire that is lighter with respect to the maximum load capacity tends to be difficult to mitigate impact caused by road surface irregularities. According to the tire of the present invention, it is possible to gradually attenuate the impact at three or more rubber layers having different physical properties and their interfaces, and it is considered that a tensile stress applied to a carcass ply is mitigated by absorbing energy with the rubber layer whose tan $\delta$ at 30°C is larger than a predetermined value, thereby improving pinch-cut resistance. Thus, even if the complex elastic modulus at 30°C ($E^*_{30}$) of the rubber layer is increased, pinch cuts become less likely to be generated, so that it is considered that steering stability can also be secured by setting the complex elastic modulus ($E^*_{30}$) to be larger than a predetermined value.

In the present invention, the tire weight G (kg) is a weight of a single tire not including a weight of a rim.

The tire of the present invention may comprise a sealant for preventing a flat tire, an electronic component for monitoring, a noise suppressing body (sponge) for improving silence property, etc. When the tire comprises these components, the tire weight G (kg) shall be a weight including them.

In the present invention, the maximum load capacity $W_L$ (kg) is a value calculated by the following equation (1) and (2) where the tire cross-sectional width is defined as Wt (mm), the tire cross-sectional height is defined as Ht (mm), and the tire outer diameter is defined as Dt (mm), the value being smaller than the maximum load capacity based on the load index (LI) defined by the JATMA standard by about 50 to 100 kg:

$$V = \{(Dt/2)^2 - (Dt/2-Ht)^2\} \times \pi \times Wt \cdots (1)$$

$$W_L = 0.000011 \times V + 100 \cdots (2)$$

In the present invention, the tire cross-sectional width Wt (mm), the tire cross-sectional height Ht (mm), and the tire outer diameter Dt (mm) can be measured directly from the actual tire or from a photographed image such as CT. The Wt, Ht, and Dt are values each measured where the tire is mounted on a standardized rim and applied with an internal pressure of 250 kPa for a tire for a passenger car or 350 kPa for a tire having the maximum load capacity larger than that of the tire for a passenger car, under a no-load condition with no load applied. The tire cross-sectional width Wt is the maximum width between outer surfaces of sidewalls excluding, if any, patterns or characters on the side surface of the tire in the above-described state. The tire cross-sectional height Ht is a distance from a bottom surface of a bead part to the outermost surface of a tread, which is half a difference between the outer diameter of the tire and a nominal size of a rim.

In the descriptions above, the "standardized rim" is a rim defined for each tire, in a standard system including a standard on which the tire is based, by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tire and Rim Technical Organisation), or "Design Rim" described in "YEAR BOOK" in TRA (The Tire and Rim Association, Inc.). In addition, in a case of tires that are not defined by the standard, the "standardized rim" refers to a rim that can be assembled and maintain an internal pressure, that is, one that has the smallest rim diameter and secondly has the narrowest rim width, among rims that do not cause air leakage between the rim and the tire.

As a method of producing a tire having a $G/W_L$ of 0.0150 or less, various methods using common general technical knowledge can be considered. For example, examples of a method that mainly contributes to reducing the tire weight G include reducing thickness and density for a rubber of a tread part or a side part, reducing a diameter of a cord material used for the tire, reducing an array density, and the like. Moreover, for example, examples of a method that mainly contributes to increasing the maximum load capacity $W_L$ include increasing the tire maximum width Wt, the tire cross-sectional height Ht, and the tire outer diameter Dt, or adjusting rigidity of each tire member to increase a volume at the time of filling with an internal pressure, or the like. By appropriately combining these methods, a tire having a $G/W_L$ of 0.0150 or

less can be easily realized.

The ratio (tan $\delta$/G at 30°C) of the tan $\delta$ at 30°C of the rubber composition to the tire weight G (kg) is preferably more than 0.010, more preferably more than 0.015, further preferably more than 0.020, further preferably more than 0.022, further preferably more than 0.024, particularly preferably more than 0.026. As the tire weight becomes lighter, there is a tendency that impact caused by road surface irregularities becomes difficult to be mitigated. When the ratio (tan $\delta$/G at 30°C) of the tan $\delta$ at 30°C of the rubber composition to the tire weight G (kg) is within the above-described ranges, the tan $\delta$ at 30°C of the rubber composition is increased according to the tire weight. As a result, it is considered that the tensile stress applied to the carcass ply is mitigated by making energy to be easily absorbed with the rubber layer of the present invention, thereby improving pinch-cut resistance.

The ratio ($(G/W_L)/E^*_{30}$) of the $G/W_L$ to the complex elastic modulus at 30°C ($E^*_{30}$) of the rubber composition is preferably less than 0.00190, more preferably less than 0.00180, further preferably less than 0.00170, further preferably less than 0.00160, further preferably less than 0.00150, particularly preferably less than 0.00140. It is considered that responsiveness during steering operation is improved, allowing for improvement of steering stability, by applying a rubber composition having a complex elastic modulus ($E^*_{30}$) of a certain value or more so that the $(G/W_L)/E^*_{30}$ becomes less than 0.00190 with respect to the $G/W_L$.

The rubber composition of the at least one rubber layer comprises a rubber component and is not particularly limited as long as it is a rubber composition satisfying the above-described physical properties, but it is preferably a rubber composition in which a content of a reinforcing filler is 110 parts by mass or less based on 100 parts by mass of the rubber component comprising 20% by mass or more of a butadiene rubber. Moreover, a rubber composition is more preferable which has a content of silica of 50 to 110 parts by mass based on 100 parts by mass of a rubber component comprising 20 to 50% by mass of a butadiene rubber having a glass transition temperature of - 14°C or less and 10 to 80% by mass of a styrene-butadiene rubber and a content ratio of silica of 60% by mass or more in 100% by mass of a total of silica and carbon black.

In the tire according to the present invention, the ratio ($G/W_L$) of the tire weight G (kg) to the maximum load capacity $W_L$ (kg) is 0.0150 or less, preferably 0.0140 or less, more preferably 0.0130 or less, further preferably 0.0127 or less, particularly preferably 0.0125 or less.

The maximum load capacity $W_L$ (kg) is preferably 300 or more, more preferably 400 or more, further preferably 450 or more, particularly preferably 500 or more, from the viewpoint of better exhibiting effects of the present invention. Moreover, the maximum load capacity $W_L$ (kg) can be, for example, 1300 or less, 1200 or less, 1100 or less, 1000 or less, 900 or less, 800 or less, 700 or less, or 650 or less, from the viewpoint of better exhibiting the effects of the present invention. The tire according to the present invention is a tire for four-wheel running and has the maximum load capacity $W_L$ (kg) of preferably 1300 or less, more preferably 1200 or less, further preferably 900 or less, particularly preferably 800 or less.

The tread of the present invention has three or more rubber layers. The structure of the rubber layer is not particularly limited, but it has, for example, a first layer whose outer surface forms a tread surface, a second layer adjacent to inside in a radial direction of the first layer, and a third layer adjacent to inside in a radial direction of the second layer. The first layer typically corresponds to a cap tread (the outermost layer). The second layer and the third layer typically correspond to a base tread or an under tread. Moreover, as long as the object of the present invention is achieved, one or more rubber layers may be further provided between the third layer and an outer layer of a belt.

When the rubber composition of the present invention is arranged as a first layer, the rubber layer (first layer) forms a land part partitioned by a plurality of circumferential grooves, resulting in a good followability to a road surface to improve ride comfort, and it is considered that pinch-cut resistance can be improved by reducing heat generation due to friction with the road surface. Moreover, when the rubber composition of the present invention is arranged inside in the radial direction of the first layer (for example, when the second layer is formed of the rubber composition of the present invention), a soft rubber layer (second layer formed of the rubber composition of the present invention) is located far from the road surface, and when deformation due to shearing of the land part occurs, the deformation can be concentrated on the rubber layer and can be effectively done with a rubber layer having a low heat generation, so that it is considered that pinch-cut resistance can be improved.

FIG. 1 is an enlarged cross-sectional view schematically showing a part of a tread of a tire. In FIG. 1, a vertical direction is a tire radial direction, a horizontal direction is a tire width direction, and a direction perpendicular to a paper surface is a tire circumferential direction.

The tread has a plurality of circumferential grooves 1 continuously extending in a tire circumferential direction. The circumferential groove 1 may extend linearly along the circumferential direction or may extend in a zigzag shape along the circumferential direction.

The tread of the present invention has a land part 2 partitioned by the circumferential groove 1 in a tire width direction.

A groove depth H of the circumferential groove 1 can be calculated by a distance between an extension line 4 of the land part 2 and an extension line 5 of the deepest part of the groove bottom of the circumferential groove 1. Besides,

when there are a plurality of circumferential grooves 1, the groove depth H can be, for example, a distance between the extension line 4 of the land part 2 and the extension line 5 of the deepest part of the groove bottom of the circumferential groove 1 (a circumferential groove 1 on the left side in FIG. 1) having the deepest groove depth among the plurality of circumferential grooves 1. In the tire of the present invention, it is preferable that a rubber layer formed of the above-mentioned predetermined rubber composition is arranged on at least a part of a region of a distance H from the outermost surface (a tread surface 3) of the land part 2 toward inside in the tire radial direction. Moreover, in the tire of the present invention, it is preferable that two or more rubber layers are present in the region of the distance H from the outermost surface of the land part toward inside in the tire radial direction, at least one of the two or more rubber layers being formed of the rubber composition. When two or more rubber layers are formed, at least one of the two or more rubber layers may be formed of the above-mentioned predetermined rubber composition.

In the present invention, as shown in FIG. 1, the tread comprises a first layer 6 whose outer surface forms the tread surface 3 and a second layer 7 adjacent to inside in the radial direction of the first layer 6. One of the circumferential grooves 1 shown on the left side of FIG. 1 is formed so that the deepest part of the groove bottom of the circumferential groove 1 is located inside in the tire radial direction with respect to the outer surface of the second layer 7. Specifically, the second layer 7 has a recessed part which is recessed inside in the tire radial direction with respect to the outer surface, and a part of the first layer 6 is formed in the recessed part of the second layer 7 with a predetermined thickness. The circumferential groove 1 is formed so as to go beyond the outer surface of the second layer 7 and enter inside of the recessed part of the second layer 7. Besides, the circumferential groove 1 may be formed at a groove depth that does not reach the outer surface of the second layer 7, such as the circumferential groove 1 shown on the right side of FIG. 1.

In FIG. 1, a double-headed arrow t1 is a thickness of the first layer 6, a double-headed arrow t2 is a thickness of the second layer 7, and a double-headed arrow t3 is a thickness of the third layer 8. In FIG. 1, a middle point in a tire width direction of the land part 2 is represented as a symbol P. A straight line represented by a symbol N is a straight line (a normal line) that passes through the point P and is perpendicular to a tangent plane at this point P. In the present specification, the thicknesses t1, t2, and t3 are measured along the normal line N drawn from the point P on the tread surface at a position where no grooves exist, in the cross section of FIG. 1.

In the present invention, the maximum thickness t1 of the first layer 6 is, but not particularly limited to, preferably 1.0 mm or more, more preferably 1.5 mm or more, further preferably 2.0 mm or more. Moreover, the thickness t1 of the first layer 7 is preferably 10.0 mm or less, more preferably 9.0 mm or less, further preferably 8.0 mm or less.

In the present invention, the thickness t2 of the second layer 7 is, but not particularly limited to, preferably 1.0 mm or more, more preferably 1.5 mm or more, further preferably 2.0 mm or more. Moreover, the thickness t2 of the second layer 7 is preferably 10.0 mm or less, more preferably 9.0 mm or less, further preferably 8.0 mm or less.

In the present invention, a thickness t3 of the third layer 8 is, but not particularly limited to, preferably 1.0 mm or more, more preferably 1.5 mm or more, further preferably 2.0 mm or more. Moreover, the thickness t3 of the third layer 8 is preferably 10.0 mm or less, more preferably 9.0 mm or less, further preferably 8.0 mm or less.

The rubber composition of the at least one rubber layer has a tan $\delta$ at 30°C (30°C tan $\delta$) of 0.15 or more, preferably more than 0.15, more preferably 0.16 or more, further preferably 0.17 or more, under a condition of an initial strain of 5%, a dynamic strain of 1%, and a frequency of 10 Hz. Moreover, the tan $\delta$ at 30°C is preferably 0.28 or less, more preferably 0.27 or less, further preferably 0.26 or less. The 30°C tan $\delta$ of the rubber composition of the first layer 6 (hereinafter referred to as 30°C tan $\delta$ of the first layer 6) is preferably 0.15 or more, more preferably 0.16 or more, further preferably 0.17 or more. The 30°C tan $\delta$ of the second layer 7 is preferably 0.10 or more, more preferably 0.11 or more, further preferably 0.12 or more. The 30°C tan $\delta$ of the third layer 8 is preferably 0.08 or more, more preferably 0.09 or more, further preferably 0.10 or more. On the other hand, each of the 30°C tan $\delta$ of the first layer 6, the second layer 7, and the third layer 8 is preferably 0.28 or less, more preferably 0.27 or less, further preferably 0.26 or less, from the viewpoint of fuel efficiency. In the present invention, the 30°C tan $\delta$ of the first layer 6 is preferably larger than the 30°C tan $\delta$ of the second layer 7 and the 30°C tan $\delta$ of the third layer 8. It is considered that, when the 30°C tan $\delta$ of the first layer 6 is larger than the 30°C tan $\delta$ of the second layer 7 and the 30°C tan $\delta$ of the third layer 8, heat generation in the first layer becomes larger during running, and a good wet grip performance can be obtained. A difference between the 30°C tan $\delta$ of the first layer 6 and the 30°C tan $\delta$ of the second layer 7 is preferably 0.1 or more, more preferably 0.2 or more, further preferably 0.3 or more, particularly preferably 0.4 or more.

The rubber composition of the at least one rubber layer has a complex elastic modulus at 30°C ($E^*_{30}$) of 5.0 MPa or more, preferably 5.5 MPa or more, more preferably 6.0 MPa or more, further preferably 6.4 MPa or more, particularly preferably 6.8 MPa or more, under a condition of an initial strain of 5%, a dynamic strain of 1%, and a frequency of 10 Hz. The $E^*_{30}$ of the rubber composition of the first layer 6 (hereinafter, $E^*_{30}$ of the first layer 6) is preferably 5.0 MPa or more, more preferably 5.5 MPa or more, further preferably 6.0 MPa or more, further preferably 6.4 MPa or more, particularly preferably 6.8 MPa or more. The $E^*_{30}$ of the second layer 7 is preferably 4.5 MPa or more, more preferably 5.0 MPa or more, further preferably 5.4 MPa or more, particularly preferably 5.8 MPa or more. The $E^*_{30}$ of the third layer 8 is preferably 2.5 MPa or more, more preferably 3.0 MPa or more, further preferably 3.4 MPa or more, particularly preferably 2.5 MPa or less. On the other hand, each of the $E^*_{30}$ of the first layer 6, the second layer 7, and the third layer 8 is preferably 15.0 MPa or less, more preferably 14.0 MPa or less, further preferably 13.0 MPa or less. In the present invention, the $E^*_{30}$ of the first

layer 6 is preferably larger than the $E^*_{30}$ of the second layer 7 and the $E^*_{30}$ of the third layer 8. It is considered that, when the $E^*_{30}$ of the first layer 6 is larger than the $E^*_{30}$ of the second layer 7 and the $E^*_{30}$ of the third layer 8, a good steering stability can be obtained. A difference between the $E^*_{30}$ of the first layer 6 and the $E^*_{30}$ of the second layer 7 is preferably 1.0 MPa or more, more preferably 1.5 MPa or more, further preferably 2.0 MPa or more, particularly preferably 2.5 MPa or more.

The rubber composition of the at least one rubber layer has a tan $\delta$ at 0°C of preferably 0.35 or more, more preferably 0.40 or more, further preferably 0.45 or more, particularly preferably 0.50 or more, under a condition of an initial strain of 10%, a dynamic strain of 2.5%, and a frequency of 10 Hz. When the tan $\delta$ at 0°C of the rubber composition of the rubber layer (preferably the first layer 6) is within the above-described ranges, wet grip performance tends to be good. On the other hand, the tan $\delta$ at 0°C of the rubber composition of the at least one rubber layer is preferably 1.50 or less, more preferably 1.30 or less, further preferably 1.10 or less, particularly preferably 0.90 or less.

A specific gravity of the rubber composition of the at least one rubber layer is preferably 1.270 or less, more preferably 1.260 or less, further preferably 1.250 or less, from the viewpoint of steering stability.

A procedure for producing a tire comprising a tread according to the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

<Rubber component>

The rubber composition according to the present invention preferably comprises at least one selected from a group consisting of an isoprene-based rubber, a styrene-butadiene rubber (SBR), and a butadiene rubber (BR), as rubber components. Each of the rubber components of the first layer 6 and the second layer 7 preferably comprises a SBR, and more preferably comprises a SBR and a BR. Moreover, each of the rubber components of the first layer 6 and the second layer 7 may be a rubber component comprising an isoprene-based rubber, a SBR, and a BR, may be a rubber component consisting of a SBR and a BR, and may be a rubber component consisting of an isoprene-based rubber, a SBR, and a BR. The rubber component of the third layer 8 preferably comprises an isoprene-based rubber. Moreover, the rubber component of the third layer 8 may be a rubber component comprising an isoprene-based rubber and a BR, and may be a rubber component consisting of an isoprene-based rubber and a BR.

(Isoprene-based rubber)

Examples of the isoprene-based rubber include a natural rubber (NR), an isoprene rubber (IR), a reformed NR, a modified NR, a modified IR, and the like. As the NR, those common in the tire industry such as, for example, SIR20, RSS#3, and TSR20 can be used. The IR is not particularly limited, and those common in the tire industry such as, for example, IR 2200 can be used. Examples of the purified NR include a deproteinized natural rubber (DPNR), an ultra pure natural rubber, and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber when compounded in 100% by mass of the rubber component is preferably 5% by mass or more, more preferably 10% by mass or more, further preferably 15% by mass or more, particularly preferably 20% by mass or more, from the viewpoints of processability and pinch-cut resistance. On the other hand, an upper limit of the content of the isoprene-based rubber in the rubber component is, but not particularly limited to, preferably 80% by mass or less, more preferably 70% by mass or less, further preferably 60% by mass or less, particularly preferably 50% by mass or less, from the viewpoint of securing damping property at a tread part.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated additives of these SBRs (hydrogenated SBRs) and the like can also be used. Among them, an S-SBR is preferable, and a modified S-SBR is more preferable.

Examples of the modified SBR include a modified SBR into which a functional group usually used in this field is introduced. Examples of the above-described functional group include, for example, an amino group (preferably an amino group in which a hydrogen atom of the amino group is substituted with an alkyl group having 1 to 6 carbon atoms), an amide group, a silyl group, an alkoxysilyl group (preferably an alkoxysilyl group having 1 to 6 carbon atoms), an isocyanate group,

an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like. Besides, these functional groups may have a substituent. Examples of the substituent include, for example, functional groups such as an amino group, an amide group, an alkoxysilyl group, a carboxyl group, and a hydroxyl group. Moreover, examples of the modified SBR include hydrogenated ones, epoxidized ones, tin-modified ones, and the like.

As the SBR, an oil-extended SBR can be used, or a non-oil-extended SBR can be used. An extending oil amount of the SBR, i.e., a content of an extending oil contained in the SBR when used is preferably 10 to 50 parts by mass based on 100 parts by mass of a rubber solid content of the SBR.

The SBRs listed above may be used alone, or two or more thereof may be used in combination. As the SBRs listed above, for example, SBRs manufactured and sold by Sumitomo Chemical Co., Ltd., JSR Corporation, Asahi Kasei Corporation, Zeon Corporation, ZS Elastomer Co., Ltd., etc. can be used.

A styrene content of the SBR is preferably 15% by mass or more, more preferably 20% by mass or more, from the viewpoints of securing damping property at the tread part and wet grip performance. Moreover, it is preferably 60% by mass or less, more preferably 50% by mass or less, from the viewpoints of temperature dependence of grip performance and abrasion resistance. Besides, in the present specification, the styrene content of the SBR is calculated by $^1$H-NMR measurement.

A vinyl bond amount of the SBR is preferably 10 mol% or more, more preferably 13 mol% or more, further preferably 16 mol% or more, from the viewpoints of ensuring reactivity with silica, rubber strength, and abrasion resistance. Moreover, the vinyl bond amount of the SBR is preferably 70 mol% or less, more preferably 65 mol% or less, further preferably 60 mol% or less, from the viewpoints of prevention of increase in temperature dependence, wet grip performance, elongation at break, and abrasion resistance. Besides, in the present specification, the vinyl bond amount of the SBR (1,2-bond butadiene unit amount) is measured by infrared absorption spectrometry.

A weight-average molecular weight (Mw) of the SBR is preferably 150,000 or more, more preferably 200,000 or more, further preferably 250,000 or more, from the viewpoint of abrasion resistance. Moreover, the Mw is preferably 2,500,000 or less, more preferably 2,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of the SBR when compounded in 100% by mass of the rubber component is preferably 10% by mass or more, more preferably 15% by mass or more, further preferably 20% by mass or more, particularly preferably 25% by mass or more, from the viewpoints of securing damping property at the tread part and wet grip performance. Moreover, it is preferably 95% by mass or less, more preferably 90% by mass or less, further preferably 85% by mass or less, particularly preferably 80% by mass or less, from the viewpoint of improving pinch-cut resistance by suppressing heat generation at the tread part.

(BR)

A BR is not particularly limited, and those common in the tire industry can be used such as, for example, a BR having a cis-1,4 bond content (cis content) of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Examples of the modified BR include BRs modified with similar functional groups and the like as explained in the above-described SBR.

Examples of the high cis BR include, for example, those manufactured by Zeon Corporation, those manufactured by Ube Industries, Ltd., those manufactured by JSR Corporation, and the like. When the high cis BR is compounded, low temperature characteristics and abrasion resistance can be improved. The cis content is preferably 95% or more, more preferably 96% or more, further preferably 97% or more. The cis content is also preferably 98% or more. Besides, in the present specification, the cis content is a value calculated by infrared absorption spectrometry.

As a rare-earth-based BR, those which are synthesized using a rare-earth element-based catalyst, have a vinyl bond amount (1,2-bond butadiene unit amount) of preferably 1.8 mol% or less, more preferably 1.0 mol% or less, further preferably 0.8 mol% or less, and a cis content (cis-1,4 bond content) of preferably 95 mol% or more, more preferably 96 mol% or more, further preferably 97 mol% or more, can be used. As the rare-earth-based BR, for example, those manufactured by LANXESS and the like can be used.

Examples of the SPB-containing BR include those in which 1,2-syndiotactic polybutadiene crystal is chemically bonded with BR and dispersed, but not those in which the crystal is simply dispersed in the BR. As such SPB-containing BR, those manufactured by Ube Industries, Ltd. and the like can be used.

As a modified BR, a modified butadiene rubber (a modified BR) modified at its terminal and/or main chain with a

functional group comprising at least one element selected from a group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

The BRs listed above may be used alone, or two or more thereof may be used in combination.

A glass transition temperature (Tg) of the BR is preferably -14°C or lower, more preferably -17°C or lower, further preferably -20°C or lower, from the viewpoint of preventing low temperature brittleness. On the other hand, a lower limit value of the Tg is, but not particularly limited to, preferably -150°C or higher, more preferably -120°C or higher, further preferably -110°C or higher, from the viewpoint of abrasion resistance. Besides, the glass transition temperature of the BR is a value measured by differential scanning calorimetry (DSC) under a condition of a temperature rising rate of 10°C/min according to JIS K 7121.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of the BR when compounded in 100% by mass of the rubber component is preferably 5% by mass or more, more preferably 10% by mass or more, further preferably 15% by mass or more, particularly preferably 20% by mass or more, from the viewpoints of abrasion resistance and pinch-cut resistance. Moreover, it is preferably 50% by mass or less, more preferably 45% by mass or less, further preferably 40% by mass or less, particularly preferably 35% by mass or less, from the viewpoint of wet grip performance.

(Other rubber components)

As the rubber components according to the present invention, rubber components other than the above-described isoprene-based rubbers, SBRs, and BRs may be included. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Reinforcing filler>

The rubber composition according to the present invention preferably comprises carbon black and silica as reinforcing fillers. Moreover, the reinforcing filler may be a reinforcing filler consisting only of carbon black and silica.

(Carbon black)

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. These carbon black may be used alone, or two or more thereof may be used in combination.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, fuel efficiency, fracture characteristics, and pinch-cut resistance. Besides, the $N_2SA$ of carbon black in the present specification is a value measured according to JIS K 6217-2: "Carbon black for rubber industry-Fundamental characteristics-Part 2: Determination of specific surface area-Nitrogen adsorption methods-Single-point procedures" A Method.

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 50 parts by mass or less, more preferably 40 parts by mass or less, further preferably 30 parts by mass or less, particularly preferably 20 parts by mass or

less, from the viewpoint of improving pinch-cut resistance by suppressing heat generation at the tread part.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area ($N_2SA$) of silica is preferably 140 $m^2/g$ or more, more preferably 150 $m^2/g$ or more, further preferably 160 $m^2/g$ or more, particularly preferably 170 $m^2/g$ or more, from the viewpoints of securing reinforcing property and damping property at the tread part. Moreover, it is preferably 350 $m^2/g$ or less, more preferably 300 $m^2/g$ or less, further preferably 250 $m^2/g$ or less, from the viewpoints of heat generation and processability. Besides, the $N_2SA$ of silica in the present specification is a value measured by a BET method according to ASTM D3037-93.

An average primary particle size of silica is preferably 20 nm or less, more preferably 18 nm or less. A lower limit of the average primary particle size is, but not particularly limited to, preferably 1 nm or more, more preferably 3 nm or more, further preferably 5 nm or more. When the average primary particle size of silica is within the above-described ranges, silica dispersibility can be more improved, and reinforcing property, fracture characteristics, and abrasion resistance can be further improved. Besides, the average primary particle size of silica can be calculated by observing silica with a transmission or scanning electron microscope, measuring 400 or more primary particles of silica observed in the field of view, and averaging them.

A content of silica based on 100 parts by mass of the rubber component is preferably 50 parts by mass or more, more preferably 60 parts by mass or more, further preferably 70 parts by mass or more, particularly preferably 80 parts by mass or more, from the viewpoints of securing damping property at the tread part and wet grip performance. Moreover, it is preferably 120 parts by mass or less, more preferably 110 parts by mass or less, further preferably 105 parts by mass or less, particularly preferably 100 parts by mass or less, from the viewpoints of reducing a specific gravity of a rubber to reduce the weight and improving pinch-cut resistance by suppressing heat generation at the tread part.

(Other reinforcing fillers)

As reinforcing fillers other than silica and carbon black, those commonly used in the tire industry can be compounded, such as aluminum hydroxide, calcium carbonate, alumina, clay, and talc.

A content of silica in 100% by mass of a total of silica and carbon black, of each of the rubber compositions of the first layer 6 and the second layer 7 is preferably 50% by mass or more, more preferably 60% by mass or more, further preferably 70% by mass or more, particularly preferably 80% by mass or more. Moreover, the content of silica is preferably 99% by mass or less, more preferably 97% by mass or less, further preferably 95% by mass or less. A content of silica in 100% by mass of a total of silica and carbon black, of the rubber composition of the third layer 8 is preferably 50% by mass or more, more preferably 75% by mass or more, further preferably 90% by mass or more, particularly preferably 100% by mass.

A total content of reinforcing fillers based on 100 parts by mass of the rubber component is preferably 130 parts by mass or less, more preferably 120 parts by mass or less, further preferably 110 parts by mass or less, particularly preferably 105 parts by mass or less, from the viewpoint of reducing a specific gravity of a rubber to reduce the weight. Moreover, it is preferably 55 parts by mass or more, more preferably 65 parts by mass or more, further preferably 75 parts by mass or more, particularly preferably 85 parts by mass or more, from the viewpoints of securing reinforcing property and damping property at the tread part.

(Silane coupling agent)

Silica is preferably used in combination with a silane coupling agent. The silane coupling agent is not particularly limited, and silane coupling agents conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based

silane coupling agents are preferably compounded. These silane coupling agents may be used alone, or two or more thereof may be used in combination.

It is preferable that the mercapto-based silane coupling agent is a compound represented by the following formula (1) and/or a compound comprising a bond unit A represented by the following formula (2) and a bond unit B represented by the following formula (3).

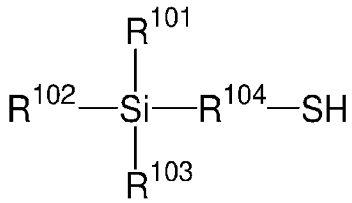

(1)

(wherein, $R^{101}$, $R^{102}$, and $R^{103}$ each independently represents an alkyl having 1 to 12 carbon atoms, an alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

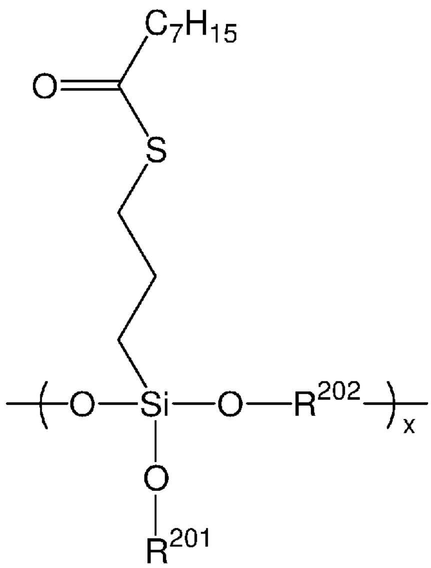

(2)

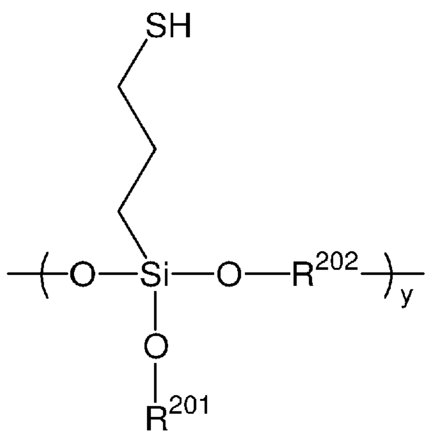

(3)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$

may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone, or two or more thereof may be used in combination.

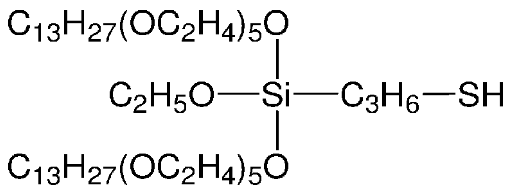

Examples of the compound comprising the bond unit A represented by the formula (2) and the bond unit B represented by the formula (3) include, for example, NXT-Z30, NXT-Z45, NXT-Z60, and NXT-Z100 manufactured by Momentive Performance Materials, and the like. They may be used alone, or two or more thereof may be used in combination.

A content of the silane coupling agent when compounded based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 30 parts by mass or less, more preferably 20 parts by mass or less, further preferably 15 parts by mass or less, from the viewpoint of preventing deterioration of abrasion resistance.

<Resin component>

The rubber composition according to the present invention preferably comprises a resin component. The resin component is not particularly limited, and examples of which include a petroleum resin, a terpene-based resin, a rosin-based resin, a phenol-based resin, and the like, which are commonly used in the tire industry, and these resin components may be used alone, or two or more thereof may be used in combination.

Examples of the petroleum resin include, for example, a C5-based petroleum resin, an aromatic-based petroleum resin, and a C5-C9-based petroleum resin. These petroleum resins may be used alone, or two or more thereof may be used in combination.

In the present specification, the "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, and isoprene. As the C5-based petroleum resin, a dicyclopentadiene resin (DCPD resin) is appropriately used.

In the present specification, the "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, a divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component and a filler. Besides, the softening point in the present specification can be defined as a temperature at which a sphere drops when the softening point specified in JIS K 6220-1: 2001 is measured with a ring and ball softening point measuring device.

As the resin component, the aromatic-based petroleum resin is preferable, and the aromatic vinyl-based resin is more preferable, from the viewpoint of obtaining ride comfort, pinch-cut resistance and wet grip performance with a good balance.

A content of the resin component when compounded based on 100 parts by mass of the rubber component is preferably 1.0 part by mass or more, more preferably 1.5 parts by mass or more, further preferably 2.0 parts by mass or more, from the viewpoints of ride comfort and wet grip performance. Moreover, it is preferably 50 parts by mass or less, more preferably 40 parts by mass or less, further preferably 30 parts by mass or less, particularly preferably 20 parts by mass or less, from the viewpoint of pinch-cut resistance.

(Other compounding agents)

The rubber composition according to the present invention can appropriately comprise compounding agents conventionally and generally used in the tire industry, for example, oil, wax, processing aid, an antioxidant, stearic acid, zinc oxide, a vulcanizing agent such as sulfur, a vulcanization accelerator, and the like, in addition to the above-described components.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, examples of the process oil include a process oil having a low content of a polycyclic aromatic (PCA) compound. Examples of the process oil having a low content of a PCA include Treated Distillate Aromatic Extract (TDAE) in which an oil aromatic process oil is re-extracted, an aroma substitute oil which is a mixture of asphalt and a naphthenic oil, mild extraction solvates (MES), a heavy naphthenic oil, and the like.

A content of oil when compounded based on 100 parts by mass of the rubber component is preferably 1 part by mass or more, more preferably 2 parts by mass or more, further preferably 3 parts by mass or more, from the viewpoint of processability. Moreover, it is preferably 80 parts by mass or less, more preferably 60 parts by mass or less, further preferably 40 parts by mass or less, from the viewpoints of fuel efficiency and pinch-cut resistance. Besides, in the present specification, the content of oil also includes an amount of oil contained in an oil-extended rubber.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

As processing aid, a fatty acid metal salt for the purpose of reducing viscosity of a rubber and securing releasability in an unvulcanized state, those widely and commercially available as a compatibilizer from the viewpoint of suppressing micro-layer separation of a rubber component, and the like can be used.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, a carbamic acid metal salt, and the like.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

Sulfur is appropriately used as a vulcanizing agent. As sulfur, a powdery sulfur, oil a processing sulfur, a

precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, but not particularly limited to, for example, sulfenamide-based, thiazole-based, thiuram-based, thiourea-based, guanidine-based, dithiocarbamate-based, aldehyde-amine-based or aldehyde-ammonia-based, imidazoline-based, and xanthate-based vulcanization accelerators. Among them, sulfenamide-based vulcanization accelerators and guanidine-based vulcanization accelerators are preferable from the viewpoint that the desired effects can be obtained more appropriately.

Examples of the sulfenamide-based vulcanization accelerator include N-cyclohexyl-2-benzothiazolyl sulfenamide (CBS), N-(tert-butyl)-2-benzothiazolyl sulfenamide (TBBS), N-oxydiethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the guanidine-based vulcanization accelerator include diphenylguanidine (DPG), diorthotrilguanidine, orthotrilbiguanidine, and the like. These vulcanization accelerators may be used alone, or two or more thereof may be used in combination.

A content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes.

[Tire]

The tire according to the present invention comprises a tread formed of the above-described rubber composition, and examples of the tire include a tire for a passenger car, a tire for a truck/bus, a tire for a two-wheeled vehicle, a high-performance tire, and the like. Among them, a tire for a passenger car is preferable. Besides, the high-performance tire in the present specification is a tire having a particularly excellent grip performance and is a concept including a racing tire used for a racing vehicle. Moreover, the tire for a passenger car in the present specification refers to a tire mounted on a four-wheeled automobile and having the maximum load capacity $W_L$ of 900 kg or less.

The tire comprising a tread formed of the above-described rubber composition can be produced by a usual method. That is, the tire can be produced by extruding an unvulcanized rubber composition compounded from the rubber component and other components as necessary into a shape of at least one rubber layer of a tread, attaching it together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

EXAMPLE

Hereinafter, the present invention will be described based on Examples, though the present invention is not limited to these Examples.

Various chemicals used in Examples and Comparative examples are collectively shown below.

NR: TSR20
SBR: a modified solution-polymerized SBR (styrene content: 40% by mass, vinyl bond amount: 25 mol%, Mw: 1,100,000, a non-oil-extended product)
BR: UBEPOL BR (Registered Trademark) 150B manufactured by Ube Industries, Ltd. (cis content: 97%, Tg: -108°C, Mw: 440,000)
Carbon Black: DIABLACK N220 manufactured by Mitsubishi Chemical Corporation ($N_2SA$: 115 $m^2/g$)
Silica: Ultrasil (Registered Trademark) VN3 manufactured by Evonik Degussa GmbH ($N_2SA$: 175 $m^2/g$, average primary particle size: 17 nm)
Silane coupling agent: Si266 manufactured by Evonik Degussa GmbH (bis(3-triethoxysilylpropyl)disulfide)
Oil: VivaTec 400 manufactured by H&R Group (TDAE oil)
Resin component: Sylvares SA85 manufactured by Kraton Corporation (copolymer of $\alpha$-methylstyrene and styrene, softening point: 85°C)
Zinc oxide: Zinc oxide No. 1 manufactured by Mitsui Mining & Smelting Co., Ltd.
Stearic acid: Bead stearic acid "CAMELLIA" manufactured by NOF CORPORATION
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

(Examples and Comparative examples)

According to the compounding formulations shown in Tables 1 to 3, using a 1.7 L closed Banbury mixer, all chemicals other than sulfur and vulcanization accelerators were kneaded until a discharge temperature from 150°C to 160°C for a period of 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test vulcanized rubber composition.

Moreover, the obtained unvulcanized rubber composition was used to be extruded into shapes of a first layer (thickness: 4.5 mm), a second layer (thickness: 5.0 mm), and a third layer (thickness: 2.0 mm) of a tread with an extruder equipped with a mouthpiece having a predetermined shape and attached together with other tire members to prepare an unvulcanized tire, and the unvulcanized tire was press-vulcanized under a condition of 170°C for 12 minutes to produce each test tire shown in Tables 4 and 7.

Besides, the "groove depth H (mm)" in Tables 4 to 7 represents a distance between a land part and an extension line of the deepest part of a groove bottom of a circumferential groove.

The obtained test vulcanized rubber composition and test tire were evaluated as follows. The evaluation results are shown in Tables 1 to 7. Besides, each maximum load capacity $W_L$ (kg) is a value calculated by the above-described equations (1) and (2) where the tire cross-sectional width is defined as Wt (mm), the tire cross-sectional height is defined as Ht (mm), and the tire outer diameter is defined as Dt (mm) when each tire is filled with 250 kPa of air.

<Measurement of tan $\delta$ and complex elastic modulus E*>

Each rubber specimen after vulcanization was cut out with 20 mm in length $\times$ 4 mm in width $\times$ 2 mm in thickness from each rubber layer of a tread part of each test tire so that a tire circumferential direction is on a long side. For each rubber specimen, using EPLEXOR series manufactured by gabo Systemtechnik GmbH, a tan $\delta$ was measured under a condition of a temperature at 0°C, an initial strain of 10%, a dynamic strain of 2.5%, and a frequency of 10 Hz, and under a condition of 30°C, an initial strain of 5%, a dynamic strain of 1%, and a frequency of 10 Hz. Moreover, for each rubber specimen, a complex elastic modulus (E*) was measured under a condition of a temperature at 30°C, an initial strain of 5%, a dynamic strain of 1%, and a frequency of 10 Hz. The results are shown in Tables 1 to 3. Besides, a thickness direction of a sample was defined as a tire radial direction.

<Steering stability>

Each test tire was filled with 250 kPa of air, mounted on all wheels of an automobile having a displacement of 2000 cc, and actual vehicle running was performed on a test course with a dry asphalt surface. Handling characteristics was evaluated based on each feeling of straight running, changing lanes, and accelerating/decelerating when running by a test driver at 120 km/h. The evaluations were performed using an integer value of 1 to 10 points, and based on evaluation criteria that the higher the score is, the more excellent the handling characteristics is, a total score of 10 test drivers was calculated. A total score of the reference Comparative examples (Comparative example 1 in Table 4, Comparative example 6 in Table 5, Comparative example 10 in Table 6, and Comparative example 14 in Table 7) was converted into a reference value (100), and the evaluation result for each test tire was indicated as an index in proportion to the total score.

<Pinch-cut resistance>

Each test tire was filled with 250 kPa of air and mounted on an automobile having a displacement of 2000 cc. After the tire was mounted, luggage was loaded into the vehicle, and a vertical load equivalent to a standardized load was applied to the tire. A protrusion with a height of 200 mm was provided on the road surface of the test course, and the vehicle was made run to get over this protrusion with the front wheels. This tire was visually observed to confirm presence or absence of damage due to pinch-cut. The vehicle was started to run from a speed of 40 km/h, and the speed was gradually increased by 0.5 km/h to measure a speed when the tire was damaged. The measurement was indicated as an index with the reference Comparative example (Comparative example 1 in Table 4, Comparative example 6 in Table 5, Comparative example 10 in Table 6, or Comparative example 14 in Table 7) being as 100. The results show that the larger the index is, the less likely the pinch-cut is generated.

Table 1

| Compounding of first layer | Production example | | | | | | | |
|---|---|---|---|---|---|---|---|---|
| | A1 | A2 | A3 | A4 | A5 | A6 | A7 | A8 |
| Compounding amount (part by mass) | | | | | | | | |
| NR | - | - | - | - | - | - | 30 | 30 |
| SBR | 80 | 80 | 80 | 70 | 70 | 70 | 50 | 50 |
| BR | 20 | 20 | 20 | 30 | 30 | 30 | 20 | 20 |
| Carbon black | 15 | 5.0 | 5.0 | 15 | 5.0 | 5.0 | 15 | 5.0 |
| Silica | 85 | 100 | 80 | 85 | 100 | 80 | 85 | 100 |
| Silane coupling agent | 6.8 | 8.0 | 6.4 | 6.8 | 8.0 | 6.4 | 6.8 | 8.0 |
| Oil | 5.0 | 15 | - | 5.0 | 15 | - | 5.0 | 15 |
| Resin component | 10 | 10 | 10 | 10 | 10 | 10 | 10 | 10 |
| Zinc oxide | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 |
| $E^*_{30}$ (MPa) | 9.0 | 11.0 | 7.0 | 8.5 | 10.5 | 6.8 | 9.5 | 11.8 |
| 30°C tan $\delta$ | 0.20 | 0.26 | 0.16 | 0.18 | 0.25 | 0.15 | 0.21 | 0.27 |
| 0°C tan $\delta$ | 0.70 | 0.75 | 0.67 | 0.65 | 0.70 | 0.61 | 0.62 | 0.68 |
| Specific gravity | 1.210 | 1.240 | 1.180 | 1.205 | 1.235 | 1.175 | 1.215 | 1.245 |

| Compounding of first layer | Production example | | | | | | |
|---|---|---|---|---|---|---|---|
| | A9 | A10 | A11 | A12 | A13 | A14 | A15 |
| Compounding amount (part by mass) | | | | | | | |
| NR | 30 | - | - | - | 30 | - | 40 |
| SBR | 50 | 90 | 90 | 80 | 50 | 90 | 50 |

(continued)

| Compounding of first layer | Production example | | | | | | |
|---|---|---|---|---|---|---|---|
| | A9 | A10 | A11 | A12 | A13 | A14 | A15 |
| Compounding amount (part by mass) | | | | | | | |
| BR | 20 | 10 | 10 | 20 | 20 | 10 | 10 |
| Carbon black | 5.0 | 15 | 15 | 20 | 15 | 15 | 15 |
| Silica | 80 | 85 | 85 | 100 | 45 | 85 | 45 |
| Silane coupling agent | 6.4 | 6.8 | 6.8 | 8.0 | 3.6 | 6.8 | 4.5 |
| Oil | - | 5.0 | 20 | 20 | - | 40 | 10 |
| Resin component | 10 | 10 | 10 | 10 | 10 | 10 | 3.0 |
| Zinc oxide | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 |
| $E^*_{30}$ (MPa) | 7.6 | 9.8 | 6.0 | 7.8 | 4.2 | 5.4 | 6.0 |
| 30°C tan $\delta$ | 0.17 | 0.22 | 0.22 | 0.30 | 0.12 | 0.21 | 0.13 |
| 0°C tan $\delta$ | 0.58 | 0.75 | 0.75 | 0.82 | 0.60 | 0.73 | 0.52 |
| Specific gravity | 1.185 | 1.212 | 1.212 | 1.203 | 1.170 | 1.188 | 1.140 |

Table 2

| Compounding of second layer | Production example | | | | | | | |
|---|---|---|---|---|---|---|---|---|
| | B1 | B2 | B3 | B4 | B5 | B6 | B7 | B8 |
| Compounding amount (part by mass) | | | | | | | | |
| NR | - | - | - | 30 | - | - | 30 | 40 |
| SBR | 80 | 70 | 70 | 50 | 90 | 80 | 50 | 50 |
| BR | 20 | 30 | 30 | 20 | 10 | 20 | 20 | 10 |
| Carbon black | 5.0 | 15 | 5.0 | 5.0 | 15 | 20 | 15 | 15 |
| Silica | 100 | 85 | 80 | 100 | 85 | 100 | 45 | 45 |
| Silane coupling agent | 8.0 | 6.8 | 6.4 | 8.0 | 6.8 | 8.0 | 3.6 | 4.5 |
| Oil | 15 | 5.0 | - | 15 | 20 | 20 | - | 10 |
| Resin component | 10 | 10 | 10 | 10 | 10 | 10 | 10 | 3.0 |
| Zinc oxide | 3.0 | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 |
| $E^*_{30}$ (MPa) | 11.0 | 8.5 | 6.8 | 11.8 | 6.0 | 7.8 | 4.2 | 6.0 |
| 30°C tan $\delta$ | 0.26 | 0.18 | 0.15 | 0.27 | 0.22 | 0.30 | 0.12 | 0.13 |
| 0°C tan $\delta$ | 0.75 | 0.65 | 0.61 | 0.68 | 0.75 | 0.82 | 0.60 | 0.52 |
| Specific gravity | 1.240 | 1.205 | 1.175 | 1.245 | 1.212 | 1.203 | 1.170 | 1.140 |

Table 3

| Compounding of third layer | Production example C1 |
|---|---|
| Compounding amount (part by mass) | |
| NR | 70 |
| BR | 30 |
| Carbon black | 40 |
| Oil | 10 |
| Zinc oxide | 3.0 |
| Stearic acid | 3.0 |
| Sulfur | 1.5 |
| Vulcanization accelerator 1 | 2.0 |
| Vulcanization accelerator 2 | 1.0 |
| $E^*_{30}$ (MPa) | 4.0 |
| 30°C tan δ | 0.10 |
| 0°C tan δ | 0.14 |
| Specific gravity | 1.080 |

Table 4

(Size: 195/65R15 91V, Rim: 15 × 6.0J, Internal pressure: 240 kPa)

| | Example | | | | | | | | | | | |
|---|---|---|---|---|---|---|---|---|---|---|---|---|
| | 1 | 2 | 3 | 4 | 5 | 6-1 | 7 | 8 | 9 | 10 | 6-2 | 6-3 |
| Compounding of first layer | A1 | A2 | A3 | A4 | A5 | A6 | A7 | A8 | A9 | A10 | A6 | A6 |
| Compounding of second layer | B8 | B8 | B8 | B8 | B8 | B8 | B8 | B8 | B8 | B8 | B7 | B2 |
| Compounding of third layer | C1 | C1 | C1 | C1 | C1 | C1 | C1 | C1 | C1 | C1 | C1 | C1 |
| Groove depth H (mm) | 8.0 | 8.0 | 8.0 | 8.0 | 8.0 | 8.0 | 8.0 | 8.0 | 8.0 | 8.0 | 8.0 | 8.0 |
| G (kg) | 6.90 | 6.95 | 6.85 | 7.70 | 6.94 | 6.84 | 6.91 | 6.96 | 6.86 | 6.90 | 6.84 | 6.84 |
| $W_L$ (kg) | 526 | 523 | 545 | 542 | 524 | 540 | 525 | 522 | 537 | 539 | 540 | 540 |
| $G/W_L$ | 0.0131 | 0.0133 | 0.0123 | 0.0138 | 0.0132 | 0.0127 | 0.0132 | 0.0133 | 0.0128 | 0.0128 | 0.0127 | 0.0127 |
| Index | | | | | | | | | | | | |
| Steering stability | 122 | 128 | 120 | 120 | 126 | 118 | 118 | 122 | 116 | 126 | 116 | 122 |
| Pinch-cut resistance | 129 | 120 | 122 | 133 | 126 | 130 | 137 | 131 | 133 | 126 | 128 | 121 |

| | Comparative Example | | | | |
|---|---|---|---|---|---|
| | 1 | 2 | 3 | 4 | 5 |
| Compounding of first layer | A11 | A12 | A13 | A14 | A13 |
| Compounding of second layer | B8 | B8 | B8 | B8 | B8 |
| Compounding of third layer | C1 | C1 | C1 | C1 | C1 |
| Groove depth H (mm) | 9.0 | 9.0 | 9.0 | 9.0 | 8.0 |
| G (kg) | 8.10 | 8.10 | 8.10 | 8.10 | 7.70 |
| $W_L$ (kg) | 524 | 525 | 526 | 530 | 539 |
| $G/W_L$ | 0.0155 | 0.0154 | 0.0154 | 0.0153 | 0.0139 |
| Index | | | | | |
| Steering stability | 100 | 108 | 82 | 78 | 86 |
| Pinch-cut resistance | 100 | 90 | 102 | 102 | 101 |

Table 5

(Size: 225/55R17 97V, Rim: 17 × 7.0J, Internal pressure: 250 kPa)

| | Example | | | | | | Comparative example | | | |
|---|---|---|---|---|---|---|---|---|---|---|
| | 11 | 12 | 13-1 | 14 | 13-2 | 13-3 | 6 | 7 | 8 | 9 |
| Compounding of first layer | A2 | A4 | A6 | A8 | A6 | A6 | A11 | A12 | A13 | A13 |
| Compounding of second layer | B8 | B8 | B8 | B8 | B7 | B2 | B8 | B8 | B8 | B8 |
| Compounding of third layer | C1 | C1 | C1 | C1 | C1 | C1 | C1 | C1 | C1 | C1 |
| Groove depth H (mm) | 7.8 | 7.8 | 7.8 | 7.8 | 7.8 | 7.8 | 8.3 | 8.3 | 8.3 | 7.8 |
| G (kg) | 8.90 | 8.90 | 8.10 | 9.00 | 8.10 | 8.10 | 9.80 | 9.80 | 9.70 | 8.90 |
| $W_L$ (kg) | 642 | 639 | 628 | 644 | 628 | 628 | 629 | 630 | 632 | 641 |
| $G/W_L$ | 0.0139 | 0.0139 | 0.0129 | 0.0140 | 0.0129 | 0.0129 | 0.0156 | 0.0156 | 0.0153 | 0.0139 |
| Index | | | | | | | | | | |
| Steering stability | 130 | 128 | 122 | 122 | 119 | 126 | 100 | 108 | 78 | 84 |
| Pinch-cut resistance | 120 | 123 | 120 | 137 | 116 | 110 | 100 | 90 | 95 | 100 |

Table 6

(Size: 185/55R16 83V, Rim: 16 × 6.0J, Internal pressure: 250 kPa)

| | Example | | | | | | Comparative example | | | |
|---|---|---|---|---|---|---|---|---|---|---|
| | 15 | 16 | 17-1 | 18 | 17-2 | 17-3 | 10 | 11 | 12 | 13 |
| Compounding of first layer | A2 | A4 | A6 | A8 | A6 | A6 | A11 | A12 | A13 | A13 |
| Compounding of second layer | B8 | B8 | B8 | B8 | B7 | B2 | B8 | B8 | B8 | B8 |
| Compounding of third layer | C1 | C1 | C1 | C1 | C1 | C1 | C1 | C1 | C1 | C1 |

(continued)

(Size: 185/55R16 83V, Rim: 16 × 6.0J, Internal pressure: 250 kPa)

| | Example | | | | | | Comparative example | | | |
|---|---|---|---|---|---|---|---|---|---|---|
| | 15 | 16 | 17-1 | 18 | 17-2 | 17-3 | 10 | 11 | 12 | 13 |
| Groove depth H (mm) | 7.5 | 7.5 | 7.5 | 7.5 | 7.5 | 7.5 | 8.0 | 8.0 | 8.0 | 7.5 |
| G (kg) | 6.30 | 6.20 | 6.10 | 6.30 | 6.10 | 6.10 | 6.80 | 6.70 | 6.60 | 6.30 |
| $W_L$ (kg) | 430 | 427 | 428 | 435 | 428 | 428 | 440 | 439 | 437 | 434 |
| $G/W_L$ | 0.0147 | 0.0145 | 0.0143 | 0.0145 | 0.0143 | 0.0143 | 0.0155 | 0.0153 | 0.0151 | 0.0145 |
| Index | | | | | | | | | | |
| Steering stability | 126 | 128 | 126 | 120 | 123 | 132 | 100 | 112 | 80 | 87 |
| Pinch-cut resistance | 120 | 129 | 123 | 134 | 121 | 117 | 100 | 88 | 89 | 93 |

Table 7

(Size: 195/55R15 91V, Rim: 15 × 6.0J, Internal pressure: 240 kPa)

| | Example | | | | Comparative example | | | |
|---|---|---|---|---|---|---|---|---|
| | 19 | 20 | 21 | 22 | 14 | 15 | 16 | 17 |
| Compounding of first layer | A15 | A15 | A15 | A15 | A15 | A15 | A15 | A15 |
| Compounding of second layer | B1 | B2 | B3 | B4 | B5 | B6 | B7 | B7 |
| Compounding of third layer | C1 | C1 | C1 | C1 | C1 | C1 | C1 | C1 |
| Groove depth H (mm) | 8.0 | 8.0 | 8.0 | 8.0 | 8.5 | 8.5 | 8.5 | 8.0 |
| G (kg) | 7.00 | 6.90 | 6.80 | 7.00 | 8.20 | 8.30 | 8.20 | 7.70 |
| $W_L$ (kg) | 534 | 534 | 536 | 539 | 543 | 542 | 540 | 538 |
| $G/W_L$ | 0.0131 | 0.0129 | 0.0127 | 0.0130 | 0.0151 | 0.0153 | 0.0152 | 0.0143 |
| Index | | | | | | | | |
| Steering stability | 118 | 118 | 116 | 116 | 100 | 110 | 78 | 83 |
| Pinch-cut resistance | 120 | 124 | 119 | 129 | 100 | 91 | 83 | 87 |

From the results in Tables 1 to 7, it can be found that the tire of the present invention, obtained by setting the tire weight with respect to the maximum load capacity of the tire, the tan δ and the complex elastic modulus of the rubber composition of the tread within the predetermined ranges, has improved steering stability and pinch-cut resistance with a good balance.

REFERENCE SIGNS LIST

1. Circumferential groove
2. Land part
3. Tread surface
4. Extension line of land part
5. Extension line of deepest part of groove bottom of circumferential groove
6. First layer
7. Second layer
8. Third layer

9. Extension line of outer surface of second layer
Wt. Tire cross-sectional width
Ht. Tire cross-sectional height
Dt. Tire outer diameter

## Claims

**1.** A tire comprising a tread,

wherein the tread has three or more rubber layers of a rubber composition comprising a rubber component, and wherein a tan δ at 30°C, "30°C tan δ", of the rubber composition of at least one rubber layer of three or more rubber layers is 0.15 or more, wherein tan δ was measured under a condition of a temperature at 30°C, an initial strain of 5%, a dynamic strain of 1%, and a frequency of 10 Hz, and a complex elastic modulus at 30°C, $E^*_{30}$, of the rubber composition of at least one rubber layer of three or more rubber layers is 5.0 MPa or more, wherein the complex elastic modulus E* was measured under a condition of a temperature at 30°C, an initial strain of 5%, a dynamic strain of 1%, and a frequency of 10 Hz;

**characterized in that** a ratio $G/W_L$ of a tire weight G in kg to a maximum load capacity $W_L$ in kg is 0.0150 or less, wherein the tire weight is the weight of a single tire not including the weight of a rim, and wherein the maximum load capacity $W_L$ is a value calculated by the following equations (1) and (2) where the tire cross-sectional width is defined as Wt in mm, the tire cross-sectional height is defined as Ht in mm, and the tire outer diameter is defined as Dt in mm:

$$(1)\ V = \{(Dt/2)^2 - (Dt/2 - Ht)^2\}\ \pi \times Wt$$

$$(2)\ W_L = 0.000011 \times V + 100.$$

**2.** The tire of claim 1, wherein a tan δ at 0°C of the rubber composition is 0.35 or more, wherein tan δ was measured under a condition of a temperature at 0°C, an initial strain of 10%, a dynamic strain of 2.5%, and a frequency of 10 Hz.

**3.** The tire of claim 1 or 2, wherein a ratio "30°C tan 6" /G of the tan δ at 30°C of the rubber composition to the tire weight G in kg is more than 0.010.

**4.** The tire of any one of claims 1 to 3, wherein the rubber composition has a specific gravity of 1.270 or less.

**5.** The tire of any one of claims 1 to 4, wherein a content of a reinforcing filler based on 100 parts by mass of the rubber component is 110 parts by mass or less.

**6.** The tire of any one of claims 1 to 5, wherein the rubber component comprises 20% by mass or more of a butadiene rubber having a glass transition temperature of -14°C or lower.

**7.** The tire of any one of claims 1 to 6, wherein the tan δ at 30°C of the rubber composition, as determined according to the description, is 0.28 or less.

**8.** The tire of any one of claims 1 to 7, wherein a ratio $(G/W_L)/E^*_{30}$ of the $G/W_L$ to the complex elastic modulus at 30°C, $E^*_{30}$, of the rubber composition is less than 0.00190.

**9.** The tire of any one of claims 1 to 8, wherein the tan δ at 30°C of the rubber composition is 0.15 to 0.28, and the 30°C tan δ/G of the rubber composition is 0.015 or more.

**10.** The tire of any one of claims 1 to 9, wherein a content of silica based on 100 parts by mass of the rubber component is 50 to 110 parts by mass, and a content of silica in 100% by mass of a total of silica and carbon black is 60% by mass or more.

**11.** The tire of any one of claims 1 to 10, wherein the rubber component comprises 20 to 50% by mass of a butadiene rubber having a glass transition temperature of -14°C or lower and 10 to 80% by mass of a styrene-butadiene rubber.

**12.** The tire of any one of claims 1 to 11, wherein the tread has a land part (2) partitioned by a plurality of circumferential grooves (1), and

wherein, when a distance between an extension line of the land part (4) and an extension line of the deepest part of a groove bottom of the circumferential groove (5) is defined as H,
a rubber layer of the rubber composition is arranged on at least a part of a region of the distance H from the outermost surface of the land part (2) toward inside in a radial direction.

**13.** The tire of claim 12, wherein two or more rubber layers are present in the region of the distance H from the outermost surface of the land part (2) toward inside in the radial direction, at least one of the two or more rubber layers being formed of the rubber composition.

**14.** The tire of any one of claims 1 to 13, wherein the tread comprises at least a first layer (6) of a tread surface (3), a second layer (7) adjacent to inside in a radial direction of the first layer (6), and a third layer (8) adjacent to inside in a radial direction of the second layer (7), and wherein a tan δ at 30°C of a rubber composition of the first layer (6) is larger than a tan δ at 30°C of a rubber composition of the second layer (7) and a tan δ at 30°C of a rubber composition of the third layer (8).

**15.** The tire of any one of claims 1 to 14, wherein the tread comprises at least a first layer (6) of a tread surface (3), a second layer (7) adjacent to inside in a radial direction of the first layer (6), and a third layer (8) adjacent to inside in a radial direction of the second layer (7), and wherein a complex elastic modulus at 30°C $E^*_{30}$ of a rubber composition of the first layer (6) is larger than a complex elastic modulus at 30°C $E^*_{30}$ of a rubber composition of the second layer (7) and a complex elastic modulus at 30°C $E^*_{30}$ of a rubber composition of the third layer (8).

**Patentansprüche**

**1.** Reifen, umfassend eine Lauffläche,

wobei die Lauffläche drei oder mehr Gummischichten einer Gummizusammensetzung aufweist, die eine Gummikomponente umfasst, und
wobei ein tan δ bei 30 °C, "30 °C tan δ", der Gummizusammensetzung von zumindest einer Gummischicht von drei oder mehr Gummischichten 0,15 oder mehr ist, wobei tan δ unter einer Bedingung von einer Temperatur bei 30 °C, einer Initialspannung von 5%, einer dynamischen Spannung von 1%, und einer Frequenz von 10 Hz gemessen wurde,
und ein komplexes Elastizitätsmodul bei 30 °C, "$E^*_{30}$", der Gummizusammensetzung von zumindest einer Gummischicht von drei oder mehr Gummischichten 5,0 MPa oder mehr ist, wobei das komplexe Elastizitätsmodul $E^*_{30}$ unter einer Bedingung von einer Temperatur bei 30 °C, einer Initialspannung von 5%, einer dynamischen Spannung von 1%, und einer Frequenz von 10 Hz gemessen wurde;
**gekennzeichnet dadurch, dass** ein Verhältnis $G/W_L$ eines Reifengewichts G in kg zu einer maximalen Ladekapazität $W_L$ in kg 0,0150 oder weniger ist, wobei das Reifengewicht das Gewicht eines einzelnen Reifens ist, der das Gewicht von einer Felge nicht beinhaltet, und wobei die maximale Ladekapazität $W_L$ ein Wert ist, der durch die folgenden Gleichungen (1) und (2) berechnet wird, wobei die Reifenquerschnittsbreite als Wt in mm definiert ist, die Reifenquerschnittshöhe als Ht in mm definiert ist, und der Reifenaußendurchmesser als Dt in mm definiert ist:

$$(1)\ V = \{(Dt/2)^2 - (Dt/2-Ht)^2\}\ \pi \times Wt$$

$$(2)\ W_L = 0{,}000011 \times V + 100.$$

**2.** Reifen gemäß Anspruch 1, wobei ein tan δ bei 0 °C der Gummizusammensetzung 0,35 oder mehr ist, wobei tan δ unter einer Bedingung von einer Temperatur bei 0 °C, einer Initialspannung von 10%, einer dynamischen Spannung von 2,5%, und einer Frequenz von 10 Hz gemessen wurde.

**3.** Reifen gemäß Anspruch 1 oder 2, wobei ein Verhältnis "30 °C tan δ"/G des tan δ bei 30 °C der Gummizusammensetzung zum Reifengewicht G in kg mehr als 0,010 ist.

4. Reifen gemäß einem der Ansprüche 1 bis 3, wobei die Gummizusammensetzung eine spezifische Dichte von 1,270 oder weniger aufweist.

5. Reifen gemäß einem der Ansprüche 1 bis 4, wobei ein Gehalt eines Verstärkungsfüllstoffs, basierend auf 100 Masseteilen der Gummikomponente, 110 Masseteile oder weniger ist.

6. Reifen gemäß einem der Ansprüche 1 bis 5, wobei die Gummikomponente 20 Masse-% oder mehr eines Butadien-Gummis umfasst, der eine Glasübergangstemperatur von -14 °C oder niedriger aufweist.

7. Reifen gemäß einem der Ansprüche 1 bis 6, wobei der tan δ bei 30 °C der Gummizusammensetzung, wie gemäß der Beschreibung bestimmt, 0,28 oder weniger ist.

8. Reifen gemäß einem der Ansprüche 1 bis 7, wobei ein Verhältnis $(G/W_L)/E^*_{30}$ des $G/W_L$ zum komplexen Elastizitätsmodul bei 30 °C, $E^*_{30}$, der Gummizusammensetzung weniger als 0,00190 ist.

9. Reifen gemäß einem der Ansprüche 1 bis 8, wobei der tan δ bei 30 °C der Gummizusammensetzung 0,15 bis 0,28 ist, und der 30 °C tan δ/G der Gummizusammensetzung 0,015 oder mehr ist.

10. Reifen gemäß einem der Ansprüche 1 bis 9, wobei ein Gehalt von Silica, basierend auf 100 Masseteilen der Gummikomponente, 50 bis 110 Masseteile ist, und ein Gehalt von Silica in 100 Masse-% einer Gesamtheit von Silica und Ruß 60 Masse-% oder mehr ist.

11. Reifen gemäß einem der Ansprüche 1 bis 10, wobei die Gummikomponente 20 bis 50 Masse-% eines Butadien-Gummis, der eine Glasübergangstemperatur von -14 °C oder niedriger aufweist, und 10 bis 80 Masse-% eines Styrol-Butadien-Gummis umfasst .

12. Reifen gemäß einem der Ansprüche 1 bis 11, wobei die Lauffläche einen Landteil (2) aufweist, der durch eine Vielzahl von Längsrillen (1) unterteilt ist, und wobei, wenn ein Abstand zwischen einer Verlängerungslinie des Landteils (4) und einer Verlängerungslinie des tiefsten Teils eines Rillenbodens der Längsrille (5) als H definiert ist,
eine Gummischicht der Gummizusammensetzung auf zumindest einem Teil eines Bereichs des Abstands H von der äußersten Oberfläche des Landteils (2) nach innen in einer Radialrichtung angeordnet ist.

13. Reifen gemäß Anspruch 12, wobei zwei oder mehr Gummischichten in der Region des Abstands H von der äußersten Oberfläche des Landteils (2) nach innen in der Radialrichtung vorhanden sind, wobei zumindest eine der zwei oder mehr Gummischichten aus der Gummizusammensetzung gebildet ist.

14. Reifen gemäß einem der Ansprüche 1 bis 13, wobei die Lauffläche zumindest eine erste Schicht (6) einer Laufflächenoberfläche (3), eine zweite Schicht (7), die in einer Radialrichtung innen an die erste Schicht (6) angrenzt, und eine dritte Schicht (8), die in einer Radialrichtung innen an die zweite Schicht (7) angrenzt, umfasst, und wobei ein tan δ bei 30 °C einer Gummizusammensetzung der ersten Schicht (6) größer ist als ein tan δ bei 30 °C einer Gummizusammensetzung der dritten Schicht (8).

15. Reifen nach einem der Ansprüche 1 bis 14, wobei die Lauffläche zumindest eine erste Schicht (6) einer Laufflächenoberfläche (3), eine zweite Schicht (7), die in einer Radialrichtung innen an die erste Schicht (6) angrenzt, und eine dritte Schicht (8), die in einer Radialrichtung innen an die zweite Schicht (7) angrenzt, umfasst, und wobei ein komplexes Elastizitätsmodul $E^*_{30}$ bei 30 °C einer Gummizusammensetzung der ersten Schicht (6) größer ist als ein komplexes Elastizitätsmodul $E^*_{30}$ bei 30 °C einer Gummizusammensetzung der dritten Schicht (8).

## Revendications

1. Pneu comprenant une bande de roulement,

dans lequel la bande de roulement a trois ou plusieurs couches de caoutchouc d'une composition de caoutchouc comprenant un composant de caoutchouc, et
dans lequel une tan δ à 30°C, "30°C tan δ", de la composition de caoutchouc d'au moins une couche de caoutchouc de trois ou plusieurs couches de caoutchouc est de 0,15 ou plus, dans lequel tan δ a été mesurée sous une condition de température de 30°C, une déformation initiale de 5 %, une déformation dynamique de 1 %

et une fréquence de 10 Hz, et
un module élastique complexe à 30°C, $E^*_{30}$, de la composition de caoutchouc d'au moins une couche de caoutchouc de trois ou plusieurs couches de caoutchouc est de 5,0 MPa ou plus, dans lequel le module élastique complexe E* a été mesuré sous une condition de température de 30°C, une déformation initiale de 5%, une déformation dynamique de 1% et une fréquence de 10 Hz ;
**caractérisé en ce qu'**un rapport $G/W_L$ entre un poids de pneu G en kg et une capacité de charge maximale $W_L$ en kg est de 0,0150 ou moins, dans lequel le poids de pneu est le poids d'un seul pneu sans incluant le poids d'une jante, et dans lequel la capacité de charge maximale $W_L$ est une valeur calculée par les équations suivantes (1) et (2) dans lesquelles la largeur de section transversale du pneu est définie comme Wt en mm, la hauteur de section transversale du pneu est définie comme Ht en mm, et le diamètre extérieur du pneu est défini comme Dt en mm :

$$(1)\ V = \{(Dt/2)^2 - (Dt/2-Ht)^2\} \times \pi \times Wt$$

$$(2)\ W_L = 0{,}000011 \times V + 100.$$

2. Pneu selon la revendication 1, dans lequel une tan δ à 0°C de la composition de caoutchouc est de 0,35 ou plus, dans lequel tan δ a été mesurée sous une condition de température de 0°C, une déformation initiale de 10%, une déformation dynamique de 2,5%, et une fréquence de 10 Hz.

3. Pneu selon la revendication 1 ou 2, dans lequel un rapport "30°C tan δ"/G entre la tan δ à 30°C de la composition de caoutchouc et le poids de pneu G en kg est supérieur à 0,010.

4. Pneu selon l'une quelconque des revendications 1 à 3, dans lequel la composition de caoutchouc a une gravité spécifique de 1,270 ou moins.

5. Pneu selon l'une quelconque des revendications 1 à 4, dans lequel une teneur en charge renforçante basé sur 100 parties en masse du composant de caoutchouc est de 110 parties en masse ou moins.

6. Pneu selon l'une quelconque des revendications 1 à 5, dans lequel le composant de caoutchouc comprend 20 % en masse ou plus d'un caoutchouc butadiène ayant une température de transition vitreuse de -14°C ou moins.

7. Pneu selon l'une quelconque des revendications 1 à 6, dans lequel la tan δ à 30°C de la composition de caoutchouc, tel que déterminé selon la description, est de 0,28 ou moins.

8. Pneu selon l'une quelconque des revendications 1 à 7, dans lequel un rapport $(G/W_L)/E^*_{30}$ entre $G/W_L$ et le module élastique complexe à 30°C, $E^*_{30}$, de la composition de caoutchouc est inférieur à 0,00190.

9. Pneu selon l'une quelconque des revendications 1 à 8, dans lequel la tan δ à 30°C de la composition de caoutchouc est de 0,15 à 0,28, et le 30°C tan δ/G de la composition de caoutchouc est de 0,015 ou plus.

10. Pneu selon l'une quelconque des revendications 1 à 9, dans lequel une teneur en silice basée sur 100 parties en masse du composant de caoutchouc est de 50 à 110 parties en masse, et une teneur en silice dans 100 % en masse d'un total de silice et de noir de carbone est de 60 % en masse ou plus.

11. Pneu selon l'une quelconque des revendications 1 à 10, dans lequel le composant de caoutchouc comprend 20 à 50 % en masse d'un caoutchouc butadiène ayant une température de transition vitreuse de -14°C ou moins et de 10 à 80 % en masse d'un caoutchouc styrène-butadiène.

12. Pneu selon l'une quelconque des revendications 1 à 11, dans lequel la bande de roulement a une partie de sol (2) divisée par une pluralité de rainures circonférentielles (1), et

    dans lequel, lorsqu'une distance entre une ligne d'extension de la partie de sol (4) et une ligne d'extension de la partie la plus profonde d'un fond de rainure de la rainure circonférentielle (5) est définie comme H,
    une couche de caoutchouc de la composition de caoutchouc est disposée sur au moins une partie d'une région de la distance H à partir de la surface la plus extérieure de la partie de sol (2) vers l'intérieur dans une direction radiale.

**13.** Pneu selon la revendication 12, dans lequel deux ou plusieurs couches de caoutchouc sont présentes dans la région de la distance H à partir de la surface la plus extérieure de la partie de sol (2) vers l'intérieur dans la direction radiale, au moins une des deux ou plusieurs couches de caoutchouc étant formée de la composition de caoutchouc.

**14.** Pneu selon l'une quelconque des revendications 1 à 13, dans lequel la bande de roulement comprend au moins une première couche (6) d'une surface de roulement (3), une deuxième couche (7) adjacente à l'intérieur dans une direction radiale de la première couche (6), et une troisième couche (8) adjacente à l'intérieur dans une direction radiale de la deuxième couche (7), et dans lequel une tan $\delta$ à 30°C d'une composition de caoutchouc de la première couche (6) est plus grande qu'une tan $\delta$ à 30°C d'une composition de caoutchouc de la deuxième couche (7) et qu'une tan $\delta$ à 30°C d'une composition de caoutchouc de la troisième couche (8).

**15.** Pneu selon l'une quelconque des revendications 1 à 14, dans lequel la bande de roulement comprend au moins une première couche (6) d'une surface de roulement (3), une deuxième couche (7) adjacente à l'intérieur dans une direction radiale de la première couche (6), et une troisième couche (8) adjacente à l'intérieur dans une direction radiale de la deuxième couche (7), et dans lequel un module élastique complexe à 30°C $E^*_{30}$ d'une composition de caoutchouc de la première couche (6) est plus grand qu'un module élastique complexe à 30°C $E^*_{30}$ d'une composition de caoutchouc de la deuxième couche (7) et qu'un module élastique complexe à 30°C $E^*_{30}$ d'une composition de caoutchouc de la troisième couche (8).

FIG.1

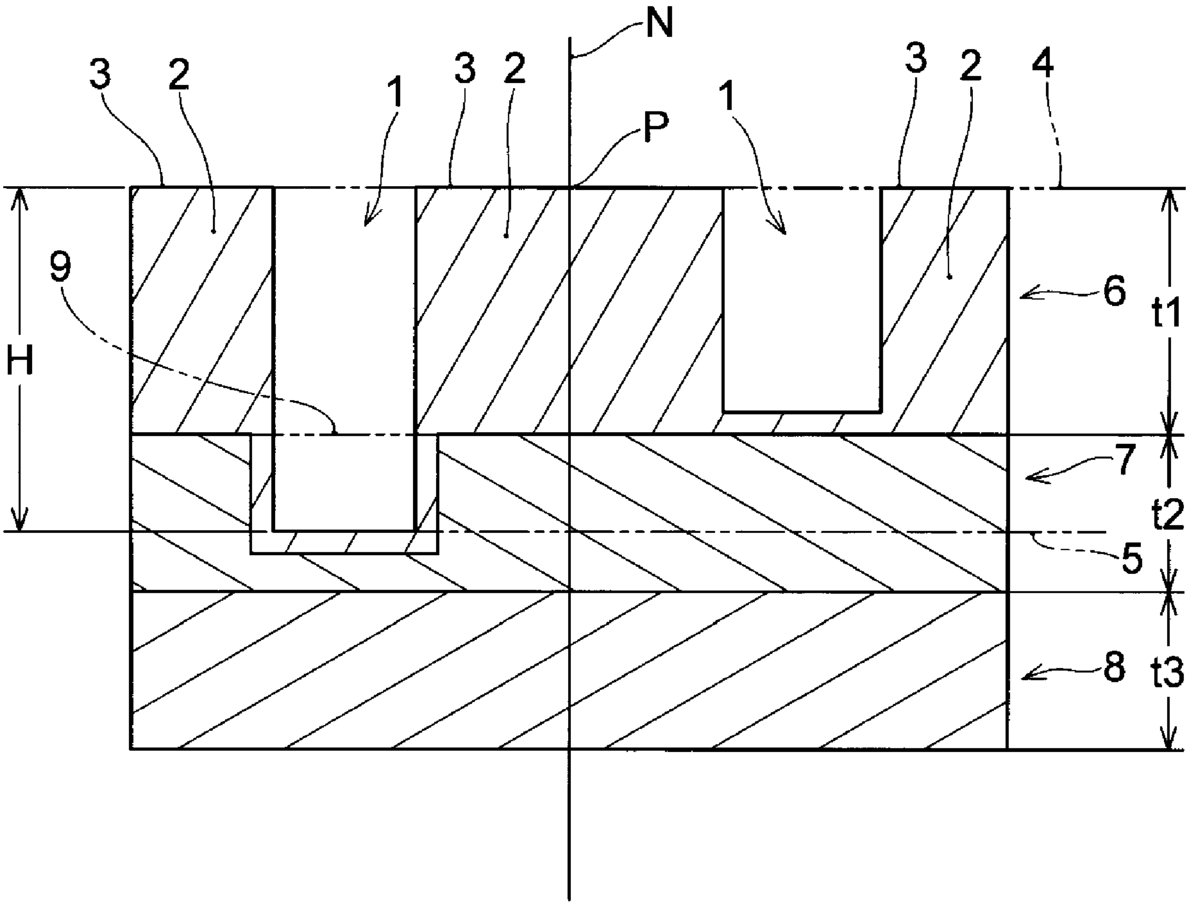

FIG. 2

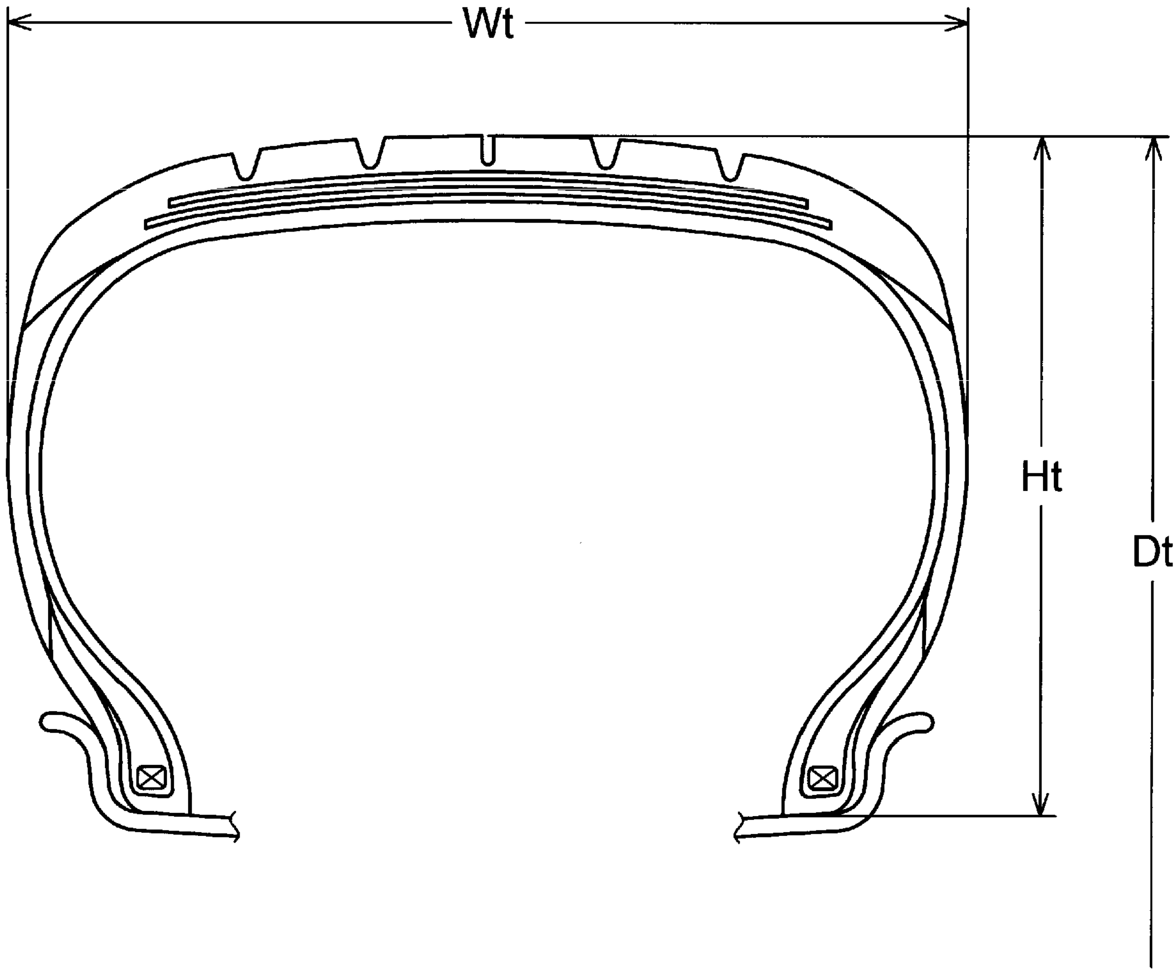

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019202578 A
- EP 3141402 A1